# EUROPEAN PATENT APPLICATION

(11) **EP 3 351 478 A1**
(43) Date of publication of application: **25.07.2018**
(21) Application number: 18152129.5
(22) Date of filing: 17.01.2018
(51) Int. Cl.: B65B 9/20, B65B 51/30, B65B 59/04, B65B 9/207, B29C 65/36, B29C 65/00, B29L 31/00, B29K 705/02

(54) **FORMING MEMBER FOR CONTROLLING THE VOLUME OF PACKS OF POURABLE FOOD PRODUCTS FORMED FROM A TUBE OF PACKAGING MATERIAL**

(30) Priority: 23.01.2017 EP 17152573
(71) Applicant: Tetra Laval Holdings & Finance S.A., 1009 Pully (CH)
(72) Inventor: VIGNOLI, Riccardo, 41125 Modena (IT); APPARUTI, Daniele, 41051 Montale Rangone (IT)
(74) Representative: Tetra Pak - Patent Attorneys SE

(57) **Abstract**

A forming member for controlling the volume of packs (2) of pourable food products formed from a tube (14) of packaging material, said tube (14) comprising a longitudinal seal (102) obtained by superimposing a first longitudinal edge (100) of said packaging material on a second longitudinal edge (101) of said packaging material and by sealing said first longitudinal edge (100) to said second longitudinal edge (101), wherein said forming member comprises a forming half-shell (71) having a forming wall arrangement (77) adapted to interact with said tube (14), and wherein said forming member further comprises a pushing element (80) associated to said forming wall arrangement (77) to push part of said food product out of said tube (14), said pushing element (80) having a grove (83) intended to receive at least a portion of said longitudinal seal (102) .

## Description

The present invention relates to a forming member for controlling the volume of packs of pourable food products formed from a tube of packaging material.

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by folding and sealing laminated strip packaging material. The packaging material has a multilayer structure comprising a base layer, e.g. of paper or mineral-filled polypropylene, and a number of layers of heat-seal plastic material, e.g. polyethylene film, covering both sides of the base layer.

In the case of aseptic packages for long-storage products, such as UHT milk, the packaging material also comprises a layer of oxygen-barrier material, e.g. an aluminium foil or ethylene vinyl alcohol (EVOH), which is superimposed on a layer of heat-seal plastic material, and is in turn covered with another layer of heat-seal plastic material forming the inner face of the package eventually contacting the food product.

As is known, packages of this sort are normally produced in fully automatic packaging machines, in which a continuous tube is formed from the web-fed packaging material. The web of packaging material is sterilized in the packaging machine, e.g. by applying a chemical sterilizing agent, such as a hydrogen peroxide solution, which, once sterilization is completed, is removed from the surfaces of the packaging material, e.g. evaporated by heating.

The sterilized web of packaging material is maintained in a closed, sterile environment, and is folded into a cylinder and sealed longitudinally to form a tube.

In particular, the packaging machine comprises a sealing unit in which a first longitudinal edge of the web of packaging material is superimposed to a second longitudinal edge, opposite to the first longitudinal edge, of the packaging material. The sealing unit comprises a sealing device that seals the first longitudinal edge to the second longitudinal edge to form a longitudinal seal of the tube.

The tube is fed in a vertical direction parallel to its axis, and is filled continuously with the sterilized or sterile-processed food product.

The packaging machine comprises a forming unit that interacts with the tube to heat seal the tube, and cut the tube, at equally spaced cross sections and so form pillow packs.

The packs are then conveyed to a downstream folding unit, where they are folded so as to generate corresponding packages.

The forming unit comprises two chain conveyors defining respective endless paths and respectively fitted with a number of jaws and counter-jaws. The two paths comprise respective branches substantially facing and parallel to each other, and between which the tube of packaging material is fed. The jaws on one conveyor, provided with respective heating elements, cooperate - along the above-mentioned branches of the respective paths - with corresponding counter-jaws on the other conveyor, provided with respective pressure elements. In this way, the heating elements and the corresponding pressure elements grip the tube at a number of successive cross sections and so seal the packs.

The forming unit also comprises a plurality of forming members. Each forming member comprises two forming half-shells, one of which is supported by a jaw and the other one of which is supported by the corresponding counter-jaw.

In particular, each of the forming half-shell is hinged to the corresponding jaw, or counter-jaw.

The two forming half-shells move cyclically between an open position, in which they are detached from the tube, and a closed position, in which they contact the tube and fold the portion of the tube between two consecutive sealing sections to define and control the volume of the pack being formed.

The forming half-shells may be spring-loaded by respective springs into the open position, and have respective rollers, which cooperate with respective cams designed to move the forming half-shells into the closed position.

Each forming half-shell has a C-shaped cross section, and comprises a main wall and two sidewalls substantially parallel to each other and projecting towards the axis of the tube of packaging material from respective opposite end edges of the main wall.

In the closed position, the main walls are located on opposite sides of the tube, are parallel to each other, and cooperate with respective first portions of the tube.

In the closed position, the sidewalls of one forming half-shell cooperate with respective second portions of the tube to control the volume of the pack being formed, and, on the opposite side with respect to the relative main wall, face corresponding sidewalls on the other forming half-shell.

To control filling of the packs being made, the main wall of each half-shell has a respective convex portion, or convex insert, which exerts pressure on - or "squeezes" - the tube so as to push some food product out of the tube before the tube is sealed. In other words, the convex portions interact with the tube to limit the amount of food product in each pack and so obtain the desired weight of each pack.

A drawback of the known forming members is that the half-shells, when interacting with the tube, induce a rotation of the tube about its longitudinal axis (the so called "tube twisting"). The rotation of the tube around its longitudinal axis generates a mispositioning of the tube with respect to the sealing element and pressure element and, therefore, defects in the pack. In other words, the rotation of the tube around its longitudinal axis may adversely affect the forming of the pack.

An object of the invention is to improve the forming members for controlling the volume of packs of pourable food products formed from a tube of packaging material.

Another object of the invention is to provide a forming member for controlling the volume of packs of pourable food products formed from a tube of packaging material which allows reducing, or avoiding, rotation of the tube around its longitudinal axis when the packs are formed from the tube.

According to the invention, there is provided a forming member for controlling the volume of packs of pourable food products formed from a tube of packaging material, said tube comprising a longitudinal seal obtained by superimposing a first longitudinal edge of said packaging material on a second longitudinal edge of said packaging material and by sealing said first longitudinal edge to said second longitudinal edge, said forming member comprising a forming half-shell having a forming wall arrangement adapted to interact with said tube, said forming member further comprising a pushing element associated to said forming wall arrangement to push part of said food product out of said tube, characterized in that said pushing element has a grove intended to receive at least a portion of said longitudinal seal.

Owing to the invention, the half-shell, in particular the pushing element associated to the half shell, has very little interaction (or no interaction at all) with the longitudinal seal and therefore the tube twisting effect is significantly reduced. The longitudinal seal creates a deviation from the axial-symmetric shape of the tube due to the overlapping of the first longitudinal edge and the second longitudinal edge. In this way, the longitudinal seal is the most critical part of the tube as far as tube twisting effect is concerned. This means that the interaction of the half-shell with the longitudinal seal causes a rotation that is bigger than the rotation caused by the interaction of the half-shell with any other part of the tube.

Thanks to the groove, it is possible to significantly reduce, or even substantially avoid, any contact of the pushing element with the longitudinal seal, i.e. with the area of the tube that is the main responsible of the tube twisting effect.

A preferred, non-limiting embodiment of the present invention will be described by way of example with reference to the accompanying drawings, in which:
Figure 1 is a schematic view in perspective, with parts removed for clarity, of a packaging machine provided with a forming member according to the present invention;
Figure 2 is a partial schematic side view of the machine of Figure 1, with parts removed for clarity;
Figure 3 is a perspective side view of the forming member according to the invention;
Figure 4 is an interrupted front view of the forming member of Figure 3;
Figure 5 is a perspective view of a first embodiment of a pushing element of the forming member;
Figure 6 is a side view of the pushing element of Figure 5 also showing the position of the packaging material with respect to the pushing element, when the forming member is in use;
Figure 7 is a perspective view of a second embodiment of a pushing element of the forming member.

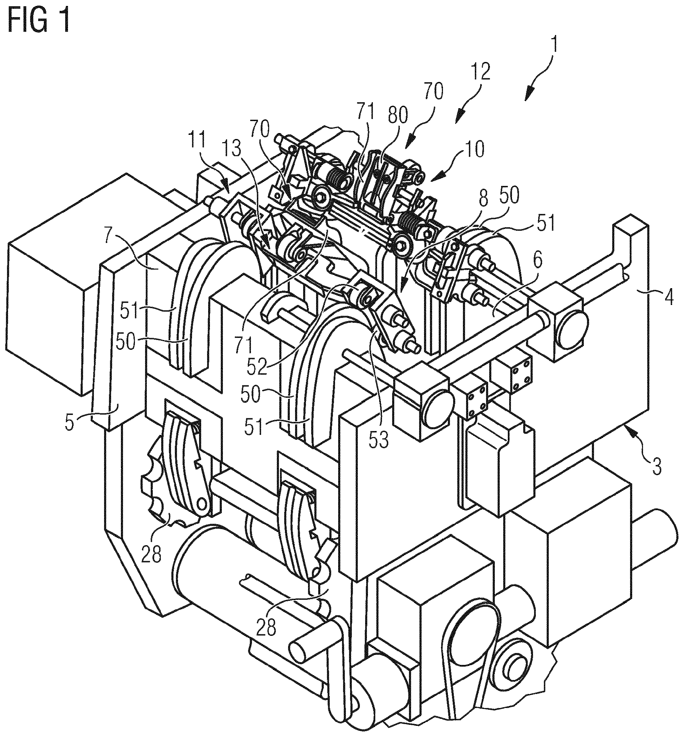

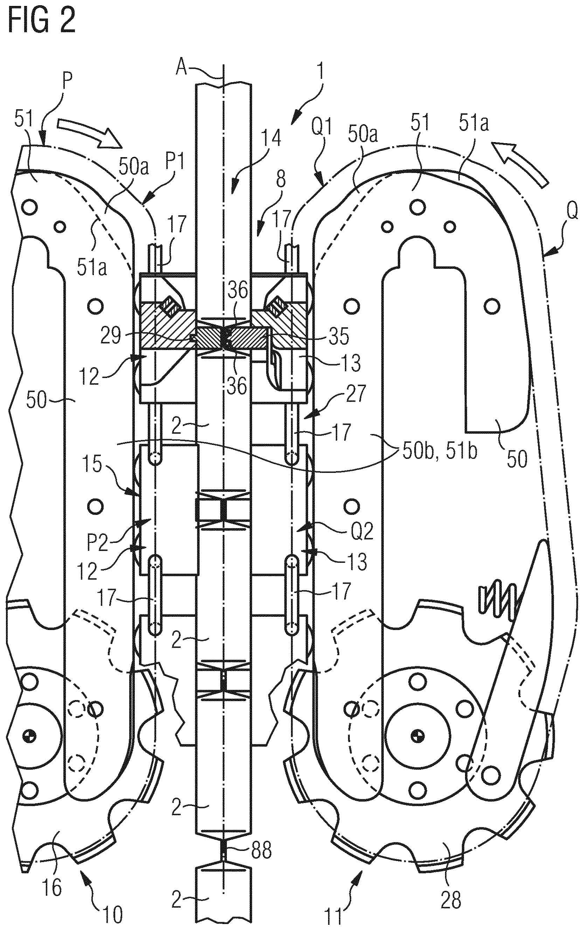

Figures 1 and 2 show a packaging machine 1 for producing, from a tube 14 of packaging material, sealed packs 2 containing a pourable food product, such as pasteurized or UHT milk, fruit juice, wine, etc.

The tube 14 has a longitudinal axis A and is formed in known manner by longitudinally folding and sealing a web of packaging material, and is filled upstream with the sterilized or sterile-processed food product.

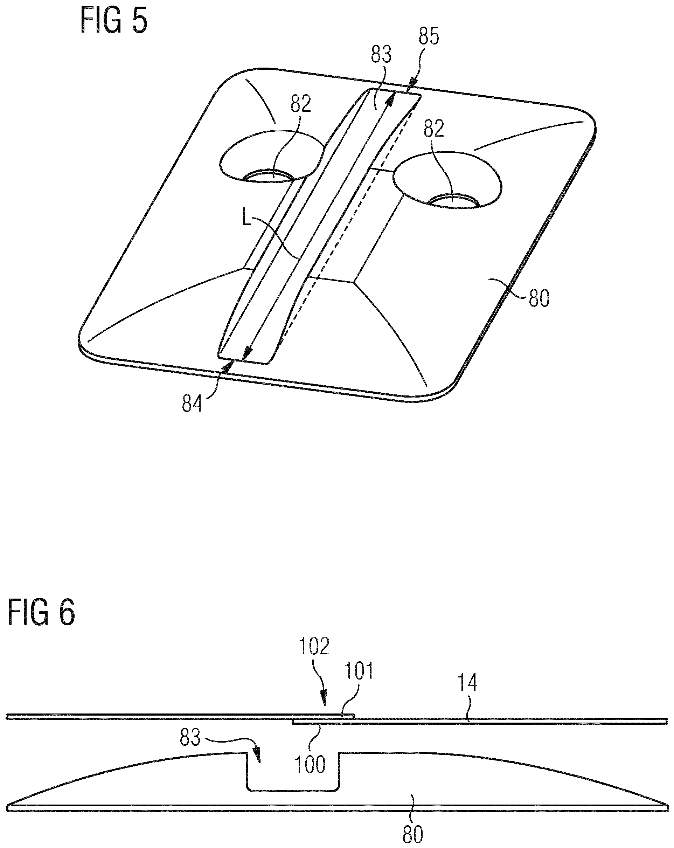

In particular, the tube 14 is obtained by superimposing a first longitudinal edge 100 (Figure 6) of the packaging material on a second longitudinal edge 101 (Figure 6) of the packaging material and by sealing the first longitudinal edge 100 to the second longitudinal edge 101 by means of a sealing device (not shown) to obtain a longitudinal seal 102.

The packaging machine 1 comprises a frame 3 (Figure 1) defined by a first side wall 4 and a second side wall 5 and by a first transverse wall 6 and a second transverse wall 7 fitted rigidly between the first side wall 4 and the second 5 and defining, with the first side wall and the second side wall 5, an opening 8.

The packaging machine 1 further comprises a first chain conveyor 10 and a second chain conveyor 11 fitted to the frame 3 and respectively comprising jaws 12 (only one shown in Figure 1) and counter-jaws 13 (only one shown in Figure 1) cooperating with each other to interact with the tube 14, which is fed along a vertical path through the opening 8.

In practice, each jaw 12 and the corresponding counter-jaw 13 are cyclically movable between a gripping position, in which they grip a cross section of the tube 14, and a release position, in which they are released from the tube 14.

The first conveyor 10 and the second conveyor 11 define, respectively, a first endless path P and a second endless path Q along which the jaws 12 and the counter-jaws 13 are fed, and which respectively extend about the first wall 6 and the second wall 7.

The first chain conveyor 10 comprises a first chain 15 extending along the first endless path P, and two drive wheels 16 (only one shown in Figure 2) meshing with opposite sides of the first chain 15 at the bottom end of the first endless path P.

The jaws 12 are an integral part of, and define, links of the first chain 15, and are connected to each other in articulated manner by pairs of link rods 17.

Similarly, the second chain conveyor 11 comprises a second chain 27 extending along the second endless path Q, and two drive wheels 28 meshing with opposite sides of the second chain 27 at the bottom end of the second endless path Q.

The counter-jaws 13 are an integral part of, and define, links of second chain 27, and are connected to each other in articulated manner by pairs of link rods 17.

Each jaw 12 comprises a sealing element 29, such as an induction heating element.

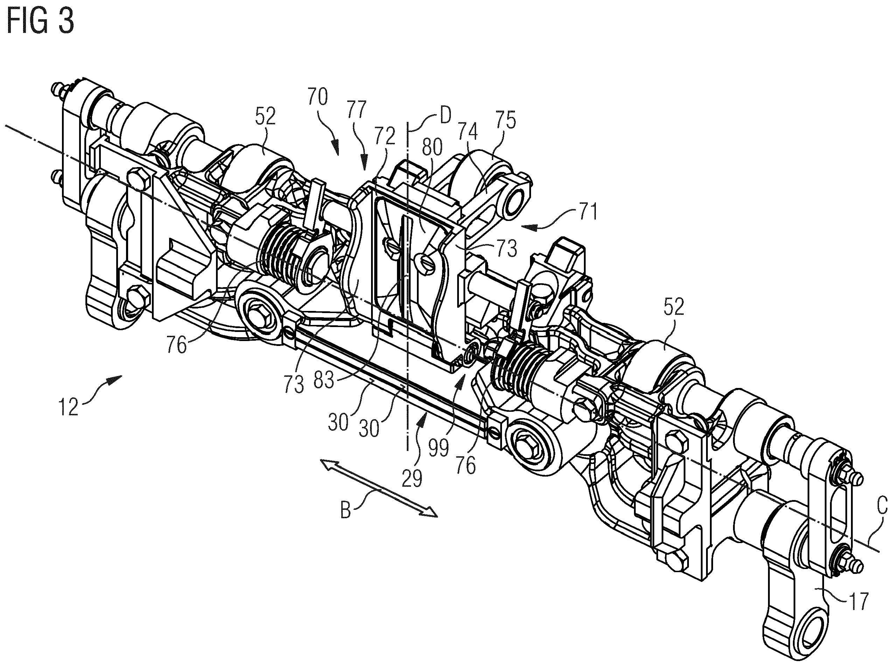

In particular, as shown in Figure 3, the sealing element 29 is fitted to a main body of the jaw 12 and is arranged along a direction B perpendicular to the axis A. The sealing element 29 comprises a pair of straight, parallel and electrically conductive active surfaces 30, which are electrically supplied by a power generator.

Each counter-jaw 13 comprises a pressure element 35 (Figure 2), which cooperates with the sealing element 29 of the corresponding jaw 12 to grip a cross section of the tube 14. On a front surface facing, in use, the corresponding jaw 12, the pressure element 35 comprises two bands 36 of deformable material, for example elastomeric material, which cooperate with the packaging material in opposition to the active surfaces 30 of sealing element 29.

The movement of the jaws 12 and the counter-jaws 13 is controlled by respective pairs of cams 50, 51 fitted to the first transversal wall 6 and the second transversal wall 7 of frame 3 and cooperating with respective pairs of rollers 52, 53 rotatably supported by the jaws 12 and the counter-jaws 13.

The first transverse wall 6 (Figure 1) is fitted with two pairs of cams 50, 51 which cooperate with respective pairs of rollers 52, 53 of the jaws 12.

Similarly, the second transverse wall 7 is fitted with two pairs of cams 50, 51 which cooperate with respective pairs of rollers 52, 53 of the counter-jaws 13.

The cams 50, 51 comprise respective substantially U-shaped portions 50a, 51a, extending about the top edge of the first transverse wall 6 and the second transverse wall 7 to define, for the first chain 15 and the second chain 27, a transmission opposite drive wheels 16 and drive wheels 28.

The cams 50, 51 also comprise respective portions 50b, 51b extending along the first transverse wall 6 and the second transverse wall 7, inside opening 8.

The portions 50a, 51a define respective path portions PI, Q1 along which the jaws 12 and the counter-jaws 13, starting from the release position, approach and contact the tube 14.

The portions 50b, 51b also define respective path portions P2, Q2 along which the jaws 12 and the counter-jaws 13 are maintained in their gripping position, in which the jaws 12 and the counter-jaw 13 press the tube 14 to form the seals defining the packs 2.

Each of the jaws 12 and the counter-jaws 13 comprises a forming member 70 for controlling the volume of the packs 2 being formed.

The forming member 70 associated to a jaw 12 and the forming member 70 associated to the corresponding counter-jaw 13 are arranged on opposite sides of the tube 14 and faces each other.

Each forming member 70 comprises a respective forming half-shell 71 that has a wall arrangement 77 comprising a main wall 72 and a pair of sidewalls 73 protruding from the main wall 72.

The forming half-shell 71 is hinged to a supporting element 99 of the respective jaw 12, or counter-jaw 13, about a rotation axis C. The rotation axis C is crosswise, in particular perpendicular, to the axis A.

Each forming member 70 further comprises a supporting body 74 that supports a cam follower roller 75. In particular, the supporting body 74 extends from the main wall 72 on the opposite side with respect to the sidewalls 73.

Due to the fact that the forming half-shells 71 are hinged to the corresponding jaw 12, or counter jaw 13, about the respective rotation axes C, the forming half-shells 71 are movable between an open position, in which they do not interact with the tube 14, and a closed position, in which they mutually cooperate to delimit a space defining the shape and the volume of the packs 2 being formed between the forming half-shells 71.

The forming half-shells 71 are kept in the open position by springs 76.

The forming half-shells 71 are moved from the open position to the closed position by the interaction of the cam follower rollers 75 with a not-shown fixed cam extending parallel to the axis A.

More specifically, as the jaw 12 and the counter jaw 13 move downwards, the forming half-shells 71 perform a work cycle comprising:
- a closing stroke, in which the forming half-shells 71 move towards the tube 14 from the open position to the closed position;
- a volume-control stroke, in which the forming half-shells 71 interact with the tube 14; and
- an opening stroke caused by the springs 76, in which the forming half-shells 71 withdraw from the tube 14 and move from the closed position to the open position.

As jaw 12 and counter jaw 13 move upwards, the forming half-shells 71 are kept in the open position by the springs 76.

With reference to Figures 3 to 7, the forming member 70 comprises a pushing element 80 associated to the forming wall arrangement 77 to push - in use - part of the food product out of the tube 14.

The pushing element 80 extends from the main wall 72 on the same side with respect to the sidewalls 73. In other words, the pushing element is arranged inside the forming half-shell 71.

The pushing element 80 comprises a bulge intended to interact with the tube 14.

The pushing element 80 is releasebly connected to the forming half-shell, in particular to the main wall 72, by means of connecting devices, for example screws 81 passing through holes 82 obtained in the pushing element 80 and received in threaded bores of the main wall 72.

In another embodiment, the pushing element is obtained as a single piece with the forming half-shell 71, in particular with the main wall 72.

The pushing element 80 has a grove 83 intended to receive at least a portion of the longitudinal seal 102.

The groove 83 crosses the above-mentioned bulge.

The groove 83 extends along a direction D transverse with respect to the rotation axis C.

With reference to Figures 3 to 7, the direction D is perpendicular to the rotation axis C.

The direction D is parallel to the longitudinal axis A when the when the half-shell 71 associated to the jaw 12 and the half-shell 71 associated to the counter-jaw 13 are in the closed position.

In this way, when the half-shell 71 associated to the jaw 12 and the half-shell 71 associated to the counter-jaw 13 are in the closed position, the twisting action of the pushing element 80 on the tube 14 is highly reduced, or even eliminated, since the interaction of the pushing element 80 with the longitudinal seal 102 is much less than in the known forming members. The longitudinal seal 102, in fact, is positioned in the groove 83 and the contact between the pushing element 83 and the longitudinal seal 102 is very limited or even totally avoided.

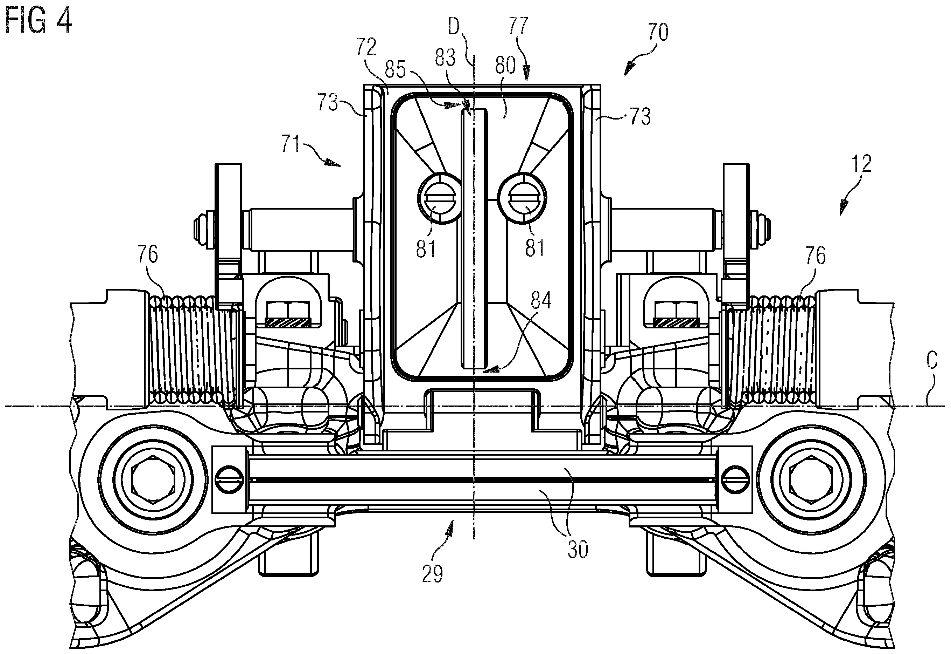

In the Figures 3 and 4, the forming member 70 associated to the jaw 12 is equipped with the pushing element 80 provided with the grove 83, whist the forming member 70 associated with the corresponding counter-jaw 13 is equipped with a pushing element without any groove. In fact, only one of the forming members 70, i.e. the one arranged on the side of the longitudinal seal 102, has to be provided with a grooved pushing element.

In another embodiment, not shown, the forming element 70 associated with the counter-jaw 13 is equipped with the pushing member 80 provided with the groove 83, whilst the forming member 70 associated with the jaw 12 is equipped with a pushing element without any groove.

With reference to Figures 4 to 6, the groove 83 extends from an end region 84 of the pushing element 80 to a further end region 85 of the pushing element 80, opposite to the end region 84. In particular, the end region 84 is intended to define a bottom end region of the pushing element 80, when the pushing element 80 is associated to the half-shell 71, whilst the further end region 85 is intended to define a top end region of the pushing element 80, when the pushing element 80 is associated to the half-shell 71. In other words, when the pushing element 80 is mounted on the half-shell 71 the end region 84 is closer to the rotation axis C than the further end region 85.

With reference to Figures 3 to 6, the groove 83 has a length L, measured along the direction D, which is substantially the same as the length of the pushing element 80 measured along the direction D.

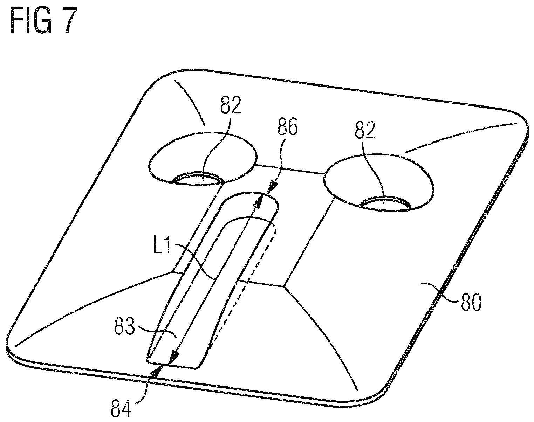

With reference to Figure 7, there is shown an embodiment of the pushing element 80 that differs from the embodiment of the pushing element 80 shown in Figures 3 to 7 in that the groove 83 extends from the end region 84 to an intermediate region 86 of the pushing element 80, interposed between the end region 84 and the further end region 85. In particular, intermediate region 86 is arranged substantially at the same distance from the end region 84 and the further end region 85.

With reference to Figures 7, the groove 83 has a length L1, measured along the direction D, which is shorter than the length of the pushing element 80 measured along the direction D. In particular the length L1 is substantially one half of the length of the pushing element 80 measured along the direction D.

The pushing element shown in Figure 7 is able to push out of the tube 14 a bigger amount of food product than the embodiment of the pushing element shown in Figures 3 to 6, without - however - causing a significant rotation of the tube 14 around the longitudinal axis A. In other words, owing to the fact that the groove 83 extends from the end region 84 to the intermediate region 86 (and not up to the further end region 85) the pushing element 80 shown in Figure 7 provides a good compromise between the need of achieving the "tube pushing" effect and the need of limiting the "tube twisting" effect.

The packaging machine 1 operates as follows.

The first chain conveyor 10 and the second chain conveyor 11 are rotated in known manner in opposite directions, as indicated by the arrows in Figure 2, so that, from the end of the path portions PI, Q1 of respective paths P, Q and along the path portions P2, Q2, each jaw 12 and the corresponding counter-jaw 13 cooperate with the tube 14 according to a movement defined by the profiles of cams 50, 51.

After a first stage in which tube 14 is contacted and gradually compressed, and the packaging material is folded locally to form a flat sealing strip 88 extending crosswise to the tube 14, the jaw 12 and the corresponding counter-jaw 13 reach, respectively, portions 50b, 51b (Figure 2) where the maximum gripping pressure is applied to the tube 14 and the sealing element 29 cooperates with the pressure element to transversally seal the tube 14 at the sealing strip 88.

At the same time, the forming half-shells 71 move towards the tube 14 form the open position to the closed position.

Once the forming half-shells 71 are closed about the tube 14 and the sealing element 29 is activated, the forming half-shells 71 control the volume and the shape of the pack 2 being formed as the tube 14 is transversally heat-sealed.

When the forming half-shells 71 are closed about the tube 14, the longitudinal seal 102 is at least partly received in the groove 83 of the pushing element 80. In this way, the interaction of the pushing element 80 with the longitudinal seal 102 is minimized.

Once sealing has been completed, a cutting member (not shown) is actuated, so as to cut the tube 14 along the sealing strip 88 separate the formed pack 2 from the remaining part of the tube 14.

At this stage, the forming half-shells 21 move away from the tube 2 under the action of the springs 76 until they reach the open position.

During operation of the packaging machine 1, a lubricating fluid, for example water, is sprayed onto the tube 14 to reduce the friction between the jaws 12 (and the counter-jaws 13) and the tube 14 and between the forming members 70 and the tube 14.

The lubricating fluid is ejected by sprinklers arranged beside the tube 14.

The reduction of the friction improves forming of the packs 2 and prevents sticking of the packs 2 to the sealing elements 29.

If the amount of lubricating fluid is too much, however, it may happen that the tube 14 slides on the forming members 70 so generating an increased risk of "tube twisting" effect.

Owing to the invention, the excess lubricating fluid flows through the groove 83 and is, therefore, removed from the forming region delimited by the half-shells 71.

Clearly, changes may be made to the forming member as described and illustrated herein without, however, departing from the scope defined in the accompanying claims.

In particular, instead of the first chain conveyor 10 and the second chain conveyor 11 the packaging machine may comprise two forming assemblies that move vertically along respective vertical cylindrical guides symmetrical with respect to the axis on the tube, and interact cyclically with the tube to grip and heat seal the tube along equally spaced cross sections crosswise to the axis of the tube. More specifically, the forming assemblies move along guides from a bottom dead-centre position to a top dead-centre position, and vice versa. Each forming assembly substantially comprises a slide that slides along the respective guide. The forming assembly further comprises two jaws hinged at the bottom to rotate about respective axes, which in use are horizontal and perpendicular to the axis of the tube. The jaws are located on opposite sides of the tube, and are movable, about the respective axes, between a closed configuration in which they grip the tube, and an open configuration, in which they are detached from the tube. More specifically, each jaw comprises a base portion hinged at its bottom end to a bottom portion of the slide about the respective axis, and an arm, which interacts with the tube, is connected to the base portion, and extends perpendicularly to the axis of the tube, when the jaws are closed onto tube, i.e. in the closed configuration. The jaws are therefore moved vertically by the slide that slides along the guide, and open and close with respect to the tube by rotating about the respective axes about which they are hinged to the slide.

The open-close movement of the jaws is superimposed on the up-down movement of the slide.

The up-down vertical movements of the two assemblies are offset by a half-period: a first assembly travels upwards with the respective jaws in the open configuration while a second assembly travels downwards with the respective jaws in the closed configuration, so that the arms of the first assembly pass between corresponding arms of the second assembly with no interference.

In this case, each jaw supports a forming half-shell. The forming half-shells arranged facing the longitudinal seal of the tube are equipped with pushing elements 80 provided with a groove 83 as disclosed above.

## Claims

1. Forming member for controlling the volume of packs (2) of pourable food products formed from a tube (14) of packaging material, said tube (14) comprising a longitudinal seal (102) obtained by superimposing a first longitudinal edge (100) of said packaging material on a second longitudinal edge (101) of said packaging material and by sealing said first longitudinal edge (100) to said second longitudinal edge (101), said forming member comprising a forming half-shell (71) having a forming wall arrangement (77) adapted to interact with said tube (14), said forming member further comprising a pushing element (80) associated to said forming wall arrangement (77) to push part of said food product out of said tube (14), **characterized in that** said pushing element (80) has a grove (83) intended to receive at least a portion of said longitudinal seal (102).

2. Forming member according to claim 1, wherein said pushing element (80) comprises a bulge intended to interact with said tube (14), said groove (83) crossing said bulge.

3. Forming member according to claim 1, or 2, wherein said forming half-shell (71) is hinged to a supporting element (99) about a rotation axis (C).

4. Forming member according to claim 3, wherein said groove (83) extends along a direction (D) transverse with respect to said rotation axis (C).

5. Forming member according to claim 4, wherein said direction (D) is perpendicular to said rotation axis (C).

6. Forming member according to any one of the preceding claims, wherein said groove (83) extends from an end region (84) of said pushing element (80) to a further end region (85) of said pushing element (80), opposite to said end region (84).

7. Forming member according to claim 6, wherein said groove (83) has a length (L), measured along said direction (D), which is substantially the same as the length of said pushing element (80) measured along said direction (D).

8. Forming member according to any one of claims 1 to 5, wherein said groove (83) extends from an end region (84) of said pushing element (80) to an intermediate region (86) of said pushing element 80, interposed between said end region (84) and a further end region (85) of said pushing element (80), opposite to said end region (84).

9. Forming member according to claim 8, wherein said groove (83) has a length (L1), measured along said direction D, which is shorter than the length of said pushing element (80) measured along said direction (D).

10. Forming member according to any one of claims 6 to 9, wherein said end region (84) is closer to said rotation axis (C) than said further end region (85) .

11. Forming member according to any one of the preceding claims, wherein said pushing element (80) is releasebly connected said forming wall arrangement (77) by means of connecting devices.

12. Forming member according to claim 6, wherein said connecting devices comprise screws (81) passing through holes (82) obtained in said pushing element (80) and received in threaded bores of said forming wall arrangement (77).

13. Forming member according to any one of claim 1 to 11, wherein said pushing element (80) is obtained as a single piece with said forming half-shell (71) .

14. Forming arrangement according to any one of the preceding claims, wherein said wall arrangement (77) comprises a main wall (72) and a pair of sidewalls (73) protruding from said main wall (72), said pushing element (80) extending from said main wall (72) on the same side with respect to said sidewalls (73).
